# EUROPÄISCHE PATENTANMELDUNG

(11) **EP 4 016 338 A1**
(43) Veröffentlichungstag der Anmeldung: **22.06.2022**
(21) Anmeldenummer: 22156601.1
(22) Anmeldetag: 09.05.2012
(51) Int. Cl.: G06F 21/10, G06F 21/62

(54) **ZUGRIFFSKONTROLLE AUF IN EINER CLOUD GESPEICHERTE DATEN**

(30) Priorität: 08.06.2011 DE 102011077218
(62) Teilanmeldung aus: 12721478.1
(71) Anmelder: ServiceNow, Inc., Santa Clara, CA 95054 (US)
(72) Erfinder: MAIDL, Monika, 81675 München (DE); SELTZSAM, Stefan, 85737 Ismaning (DE)
(74) Vertreter: Grünecker Patent- und Rechtsanwälte PartG mbB

(57) **Zusammenfassung**

Es wird vorgeschlagen, eine bekannte digitale Rechteverwaltung (EDRM: Enterprise Digital Rights Management) so zu erweitern, dass eine Kontrolle über den Zugriff von Daten, die in einer Cloud gespeichert sind, bei dem Benutzer bzw. Ersteller der Daten verbleibt. Dazu ist eine Abstimmung der Zugriffsinformationen zwischen einer Rechte-Applikation in der Cloud mit einem Rechte-Server in dem Bereich des Benutzers (also außerhalb der Cloud) erforderlich. Mittels einer Rechte-Policy ist es möglich, feingranular den Zugriff für Benutzer (gruppen), Rechner (Client, Server) sowie Gültigkeitsdauern zu regeln. Der Zugriff umfasst dabei unterschiedlichste mit den Daten durchführbare Aktionen. Insbesondere ist es von Vorteil, dass eine Server-Applikation einen (zeitlich begrenzten) Zugriff auf einen Teil der Daten erhält, um diese z.B. zu Indizieren, ohne dass der Server dabei auf die vollständigen Inhalte der Daten zugreifen kann. Der Ansatz funktioniert beispielsweise für Dokumentenmanagement als auch für in der Cloud ausgelagerte Datenbanken. Die Erfindung kann für jede Art der verteilten Datenverarbeitung eingesetzt werden, in der die Daten vor unberechtigten Zugriffen geschützt werden sollen.

## Beschreibung

Die Erfindung betrifft ein Verfahren zum Zugriff auf in einer Cloud gespeicherte Daten sowie entsprechende Vorrichtungen.

Der Begriff "Cloud Computing" umschreibt einen Ansatz, abstrahierte informationstechnische (IT-) Infrastrukturen (z.B. Rechenkapazität, Datenspeicher, Netzwerkkapazitäten oder auch fertige Software) dynamisch an den Bedarf angepasst über ein Netzwerk zur Verfügung zu stellen. Aus Sicht des Nutzers scheint die zur Verfügung gestellte Infrastruktur fern und undurchsichtig, wie in eine "Wolke" gehüllt.

Bei diesem Ansatz wird ein Teil der IT-Landschaft (in diesem Zusammenhang etwa Hardware wie Rechenzentrum, Datenspeicher sowie Software) nicht mehr auf Nutzerseite betrieben oder am Ort des Nutzers bereitgestellt, sondern beispielsweise bei einem oder mehreren Anbietern als Dienst gemietet, wobei diese Anbieter geographisch entfernt angesiedelt sein können. Die Anwendungen oder Daten befinden sich nicht mehr (nur) auf dem lokalen Rechner oder einem (Firmen-)Rechenzentrum, sondern in der "Wolke", nachfolgend bezeichnet als Cloud. Die Cloud kann dabei Teil des Internets sein oder dieses umfassen.

Cloud Computing bietet die Möglichkeit, netzbasierte Anwendungen in neuen Geschäftsmodellen anzubieten. Dienstleistungen in der Cloud können dabei auf verschiedenen Ebenen zur Verfügung gestellt werden:
(a) Infrastruktur (IaaS):
   Ein potentieller Kunde "mietet" Rechenleistung, um seine eigenen Dienste zu realisieren. Cloud Computing nutzt hierzu Rechenzentren, die sich entweder konzentriert an einem Ort befinden, oder die zur Erbringung von flexiblen Diensten verteilt zusammengeschaltet sein können.
   Auf diesen Rechnern werden virtuelle Maschinen ausgeführt. Die Kunden laden Daten (z.B. Bilder) in die Cloud, die Verarbeitung erfolgt ohne Benutzerinteraktion im Rechenzentrum.
(b) Plattform (PaaS):
   Der Kunde erhält Zugriff auf eine Plattform, die zum einen die Infrastruktur für die Erbringung eines Dienstes als auch bestimmte Softwareteile (z.B. Middleware) umfasst, mit deren Hilfe Dienste erstellt werden können. Der damit erstellte Dienst ist beispielsweise eine Webapplikation.
(c) Software (SaaS):
   Ein Cloud-Anbieter (auch bezeichnet als Cloud-Provider) bietet eine netzbasierte Applikation an, die der Kunde mittels seines Browsers nutzt. Dabei können von dem Kunden über den Browser Dokumente oder Datensätze angelegt oder bearbeitet werden.

Die Auslagerung von Applikationen und Daten kann eine Sicherheitsbedrohung darstellen, denn Daten und Dokumente werden bei dem Cloud-Anbieter gespeichert und - je nach Typ der Cloud bzw. Implementierung des Dienstes - dort auch verarbeitet (d.h. auf diese Daten wird auch in der Cloud zugegriffen) .

So haben beispielsweise lokale Systemadministratoren des Dienstbetreibers (auch bezeichnet als Cloud-Systemadministratoren), sofern keine besonderen Schutzmaßnahmen getroffen werden, beliebig Zugriff auf die Daten. Außerdem sind sonstige Angriff auf die Daten möglich bzw. weiß der Nutzer, der seine Daten in die Cloud auslagert nicht, welche Sicherheitsmaßnahmen für seine Daten getroffen wurden und ob diese wirksam sind. Mit anderen Worten, kann der Benutzer die wirkliche Bedrohung seiner womöglich vertraulichen oder sensiblen Daten nicht oder nur schlecht abschätzen.

Ein durchgängiger Schutz der Daten vor unberechtigtem Zugriff, insbesondere eine Abschirmung gegenüber den Systemadministratoren (dies wird auch als "Operator Shielding" bezeichnet) sind wichtige Voraussetzungen für die Auslagerung kritischer (z.B. sicherheitsrelevanter und/oder vertraulicher) Daten in die Cloud. Ein durchgängiger Schutz, der unabhängig von den vom Cloud-Anbieter bereitgestellten Sicherheitsmaßnahmen ist, kann nur erreicht werden, wenn der Eigentümer der Daten die Kontrolle über den Zugriff auf die Daten sowie die dazu erforderlichen Sicherheitsmaßnahmen hat.

Eine dokumentenbasierte Cloud-Anwendung besteht aus einem auf dem Server laufenden Programm (auch bezeichnet als Server-Applikation oder AppS) und einem lokal beim Benutzer laufenden Programm (auch bezeichnet als Client-Applikation oder AppC), das typischerweise in einem Webbrowser abläuft. Dabei kann je nach Architektur die Aufteilung einer Software zwischen der Server- und der Client-Applikation unterschiedlich skalieren oder ausgestaltet sein.

Eine verbreitete Methode zum Schutz von Daten in Cloud-Anwendungen ist die Verschlüsselung der Daten. Dabei gibt es zwei Varianten:
(A) Die Verschlüsselung wird durch den Eigentümer der Daten durchgeführt bevor Dokumente an die Cloud-Anwendung übergeben werden. Der Eigentümer verwaltet die entsprechenden Schlüssel. Die Dokumente sind auf dem Transportweg in die bzw. aus der Cloud und bei der Speicherung in der Cloud durchgängig geschützt.
(B) Die Cloud-Anwendung verschlüsselt Dokumente bei Ankunft oder beim Abspeichern auf lokalen Datenträgern innerhalb der Cloud, wobei der Cloud-Anbieter einen sogenannten Verschlüsselungsschlüssel verwaltet. Der sichere Transport der Dokumente ist durch Verwendung eines sicheren Kanals explizit zu gewährleisten (z.B. mittels eines sicheren Hypertext-Übertragungsprotokolls, "https").

Im dem Fall (A) ist keine Verarbeitung der Dokumente und Daten in der Cloud möglich, sondern nur die reine Speicherung. Damit ist eine sinnvolle Bearbeitung von Dokumenten erst nach der Entschlüsselung durch einen Anwender lokal auf seinem Rechner möglich. Problematisch und aufwändig in diesem Fall ist die sichere Verwaltung des verwendeten Schlüsselmaterials, das allen berechtigten Anwendern zur Verfügung gestellt werden muss, die die Dokumente einsehen oder bearbeiten sollen.

Da in dem Fall (B) die Verschlüsselung innerhalb der Cloud durch die gemietete Software durchgeführt wird, gibt es z.B. für Cloud-Systemadministratoren Angriffspunkte zur Umgehung der Verschlüsselung. Bekannte Verfahren erfordern zur sicheren Umsetzung einer solchen Lösung neben technischen Mitteln auch organisatorische Maßnahmen, die üblicherweise stets eine Schwachstelle darstellen. Der Eigentümer der Daten muss damit dem Cloud-Anbieter als Betreiber der Cloud-Anwendung ein erhebliches Maß an Vertrauen entgegen bringen dahingehend, dass der Cloud-Anbieter Verschlüsselungslösung sicher umsetzt.

Als digitale Rechteverwaltung (DRM: Digital Rights Management) ist ein System für Unternehmen, bezeichnet als EDRM (Enterprise Digital Rights Management) bekannt, das einen Zugriffsschutz auf Dokumente unabhängig von ihrem Speicherort realisiert. Ein geschütztes Dokument kann von einem autorisierten Anwender nur entsprechend seiner dafür geltenden Zugriffsrechte geöffnet und bearbeitet werden, unabhängig davon, wo das Dokument gespeichert oder wie es übertragen wurde. Ein nicht-autorisierter Nutzer ohne Zugriffsrechte kann mit einer Kopie des Dokuments, die er z.B. per Email erhalten oder auf einem USB-Stick entdeckt hat, nichts anfangen.

Jedoch müssen zur Verwendung von EDRM die Anwendungen speziell dafür angepasst werden, d.h. sie müssen um eine EDRM-Funktionalität ergänzt werden, da die Grundlage von EDRM die Verschlüsselung von Dokumenten darstellt. Der Herausgeber eines Dokuments verschlüsselt das Dokument, bevor er es freigibt; weiterhin definiert der Herausgeber zusätzlich die Rechte für Benutzer und/oder Gruppen für das Dokument. Die verschlüsselte Datei inklusive der Zugriffsrechte wird an einen EDRM-Server geschickt.

Neben dem EDRM-Server, der den zentralen Teil des EDRM-Ansatzes darstellt, gibt es einen EDRM-Client, der auf jedem Rechner, der EDRM-geschützte Dokumente bearbeiten soll, installiert sein muss. Der EDRM-Client übernimmt die Kommunikation mit dem EDRM-Server, um den Schlüssel und die Rechte eines Nutzers bezüglich eines Dokumentes zu ermitteln. Den Schlüssel liefert der EDRM-Server erst nach einer Authentisierung des Benutzers gegenüber dem EDRM-Server. Der EDRM-Client übergibt die Rechte an eine EDRM-fähige Anwendung, die für die Einhaltung der Rechte verantwortlich ist. Die Entschlüsselung des Dokuments übernimmt der EDRM-Client, ebenso wie eine später eventuell nötige erneute Verschlüsselung. Der Schlüssel wird von dem EDRM-Client durch Code-Verschleierung und anderer Technologien selbst vor einem Anwender mit Administrationsrechten geheim gehalten.

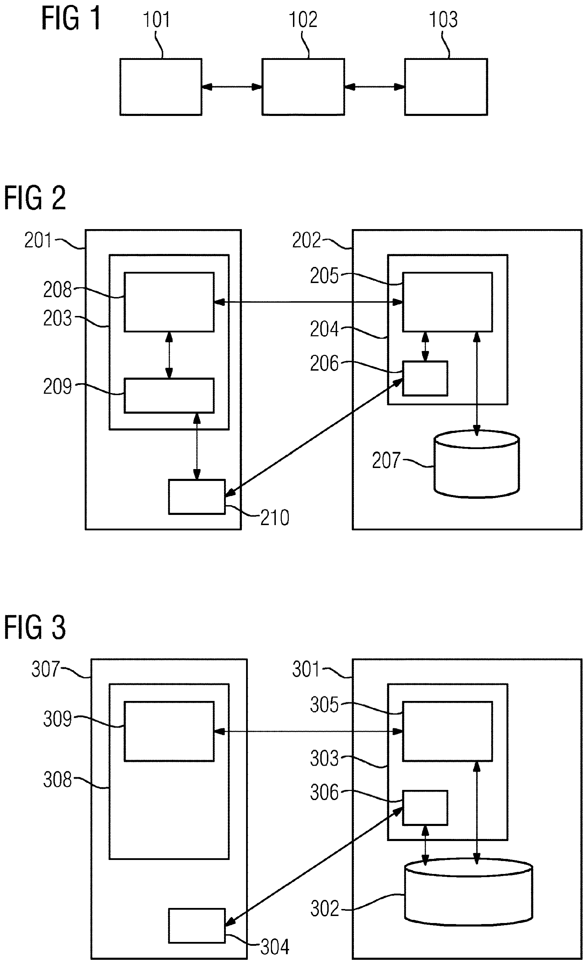

**Fig.1** zeigt eine Architektur eines bekannten EDRM-Ansatzes. Ein EDRM-Client 101 ist mit einem EDRM-Server 102 verbunden. Der EDRM-Server ist mit einem weiteren EDRM-Client 103, z.B. einem Rechner eines Kunden, Zulieferers oder Geschäftspartners, verbunden. Bei den EDRM-Clients 101, 103 sowie bei dem EDRM-Server kann es sich um Funktionalitäten (umfassend Hard- und/oder Software) handeln, die auf Rechnern, z.B. Personalcomputern, vorgesehen bzw. installiert sind.

Ein (geschütztes) Dokument wird wie folgt erstellt:
(1) Der Autor/Besitzer erstellt das Dokument.
(2) Mithilfe des EDRM-Clients 101 verschlüsselt der Autor/Besitzer das Dokument, und spezifiziert die Zugriffsrechte in einem von dem EDRM System vorgegebenen Format, einer sogenannten EDRM-Policy. Dabei ist es möglich, detailliert Zugriffsrechte zu beschreiben bzw. zu vergeben: Beispielsweise kann für jede berechtigte Person bestimmt werden, ob sie das Dokument lesen, drucken, verändern oder weiterverteilen kann. Auch ein Zeitraum, während dessen der Zugriff gestattet ist, kann (z.B. personenbezogen) limitiert werden.
(3) Das verschlüsselte Dokument wird zusammen mit den Rechten an den EDRM Server 102 geschickt.

Ein Zugriff auf das geschützte Dokument gestaltet sich wie folgt:
(1) Ein Benutzer lädt das geschützte Dokument in eine (z.B. lokal auf seinem Computer ablaufende) Applikation. Er benötigt für den Zugriff lokal den EDRM-Client 103. Dieser EDRM-Client 103 ist mit kryptographischen Mitteln an das lokale Gerät und den Benutzer gebunden.
(2) Der EDRM-Client 103 kontaktiert den EDRM-Server 102, der mit einer Aufforderung zur Authentisierung des Benutzers antwortet.
(3) Ist die Authentisierung erfolgreich, erhält der EDRM-Client 103 das Rechteobjekt mit der EDRM-Policy und dem Entschlüsselungsschlüssel.
(4) Der EDRM-Client 103 entschlüsselt das Dokument und gibt es an die Anwendung weiter. Aktionen auf dem Dokument wie Drucken oder Bearbeiten führt die Anwendung nur durch, wenn der EDRM-Client 103 diese gemäß der spezifizierten Rechte der EDRM-Policy gestattet. Das bedeutet, dass die Applikation auf die EDRM-Funktionalität angepasst sein muss.

Es ist möglich, bestehende EDRM Lösungen im Zusammenhang mit einer Cloud zu verwenden, und Dokumente damit durch Verschlüsselung zu schützen. EDRM kann somit als eine Funktionalität betrachtet werden, die eine Verschlüsselungsmethode mit Schlüsselmanagement umfasst. Analog zu den oben beschriebenen Varianten (A) und (B) kann der Eigentümer des Dokuments den EDRM-Server 102 betreiben (und damit die Schlüsselverwaltung unter seiner Kontrolle haben) oder aber kann der Cloud-Anbieter den EDRM-Server 102 bereitstellen.

In Bezug auf die Cloud-Anwendung können Dokumente mit EDRM-Schutz abgespeichert werden, so dass diese Dokumente nur von autorisierten Benutzern (gemäß der EDRM-Policy) lokal auf ihrem Gerät bearbeitet werden können. Dabei ergeben sich die folgenden Probleme:
(a) Wenn Dokumente online von der Server-Applikation (AppS) bearbeitet werden sollen (z.B. zum Editieren eines Dokuments oder für eine Konvertierung in eine PDF-Datei), müssen bei bekannten EDRM-Systemen dem Server entsprechende Lese- oder Verarbeitungsrechte erteilt werden. Alle Bearbeitungen, die von der Server-Applikation durchgeführt werden, werden somit mit der EDRM-Berechtigung des Servers durchgeführt, die automatisch erteilt werden muss, insbesondere ohne jede vorhergehende Benutzer-Authentisierung. Hierin liegt ein Angriffspunkt, den z.B. Systemadministratoren oder externe Angreifer ausnützen können.
(b) Bestehende EDRM-Systeme können nicht zwischen Bearbeitung durch den Server (z.B. Suchindexierung oder Überprüfen auf Viren) und Bearbeitung durch den (autorisierten) Benutzer unterscheiden. Auch wenn die Bearbeitung durch einen berechtigten Benutzer erfolgt, der z.B. ein Dokument editiert, ist im EDRM-System nicht nachvollziehbar, wer auf das Dokument zugegriffen hat, denn in den entsprechenden Protokolleinträgen auf dem EDRM-Server ist nur der Zugriff durch den Server eingetragen.
(c) Die zwei Anteile der Applikation, d.h. die Server-Applikation und die Client-Applikation, laufen in verschiedenen Kontexten, d.h. auf dem Server und lokal auf dem Computer des Benutzers, mit unterschiedlichen Sicherheitsanforderungen. Je nach Risikobewertung wird ein Eigentümer eines Dokuments beispielsweise eher eine Bearbeitung durch die Client-Applikation oder aber durch die Server-Applikation erlauben. Ferner kann es, je nach Aufteilung der Applikation, wünschenswert sein, dass für die Client-Applikation andere Rechte als für die Server-Applikation vergeben werden. Beispielsweise ist ein Recht zum Drucken eines Dokuments für eine Server-Applikation weniger sinnvoll als z.B. ein Recht zum Konvertieren des Dokuments in eine PDF-Datei. Ohne eine Unterscheidung zwischen den Rechten nach Server-Applikation und Client-Applikation ist die Semantik von manchen Rechten unklar, was zu Problemen bei der Spezifikation der Rechte an einem Dokument führen kann.

Die **Aufgabe** der Erfindung besteht darin, die vorstehend genannten Nachteile zu vermeiden und insbesondere eine effiziente Lösung anzugeben zur sicheren Verwendung von in einer Cloud gespeicherten Daten.

Diese Aufgabe wird gemäß den Merkmalen der unabhängigen Ansprüche gelöst. Bevorzugte Ausführungsformen sind insbesondere den abhängigen Ansprüchen entnehmbar.

Zur Lösung der Aufgabe wird ein Verfahren zum Zugriff (insbesondere zur Nutzung) auf in einer Cloud gespeicherte Daten,
(a) bei dem eine Anfrage bezüglich eines Zugriffs auf die Daten von einer Rechte-Applikation an einen Rechte-Server übermittelt wird,
(b) bei dem von dem Rechte-Server basierend auf der Anfrage der Rechte-Applikation geprüft wird, ob ein Zugriff auf die Daten erlaubt ist,
(c) bei dem, sofern der Zugriff auf die Daten erlaubt ist, der Rechte-Applikation von dem Rechte-Server eine Zugriffsinformation bereitgestellt wird,
(d) bei dem von der Rechte-Applikation der Zugriff auf die Daten durchgeführt wird.

Die Cloud kann gemäß den in diesem Dokument vorgenommenen Erläuterungen eine (z.B. teilweise allgemein oder öffentlich zugängliche) Ressource in einem Netzwerk, z.B. dem Internet, sein. Die Cloud umfasst Daten, Applikation. Die Dienste der Cloud können von einem Cloud-Anbieter bereit gestellt werden.

Entsprechend kann kein Zugriff auf die Daten zugelassen sein bzw. eine explizite Ablehnung oder Zurückweisung erfolgen, falls sich aus der Prüfung ergeben hat, dass der Zugriff nicht erlaubt ist.

Die vorliegende Lösung ermöglicht eine feinstufige Zugriffskontrolle auf Daten oder Applikationen, die von einer Cloud bereitgestellt werden, insbesondere für dokumentenbasierte Applikationen oder Datenbankzugriffe. Dabei kann vorteilhaft der Zugriff unter der Aufsicht eines Eigentümers der Daten oder Applikationen erfolgen.

Bei der Rechte-Applikation kann es sich um einen Teil der Server-Applikation handeln. Insbesondere können Server-Applikation und Rechte-Applikation innerhalb der Cloud, z.B. bei einem Cloud-Anbieter oder in einer von ihm kontrollierten Umgebung, implementiert sein.

Ergänzend sei angemerkt, dass zwei Rechte-Applikationen vorgesehen sein können, eine Rechte-Applikation, die der Client-Applikation zugeordnet ist und eine Rechte-Applikation, die der Server-Applikation zugeordnet ist.

Eine Weiterbildung ist es, dass vor dem Schritt (a) eine Client-Applikation bei einer Server-Applikation authentisiert wird.

Bei der Server-Applikation kann es sich um eine Applikation des Cloud-Anbieters handeln. Dabei kann mittels der Server-Applikation ein Zugriff auf die Daten koordiniert werden. Insbesondere kann es sich bei der Server-Applikation um eine Datenbankapplikation handeln, die auf geschützte Daten(sätze) einer Datenbank in der Cloud zugreift. Insbesondere sind die Daten in der Cloud verschlüsselt abgespeichert, eine Entschlüsselung erfolgt mittels der hier beschriebenen Rechte-Applikation.

Eine andere Weiterbildung ist es, dass die Rechte-Applikation den Zugriff auf die Daten durchführt und an die Server-Applikation weiterleitet.

Beispielsweise kann die Datenbank über ein Datenbankmanagementsystem verfügen, das den Zugriff auf die Datensätze koordiniert. Das Datenbankmanagementsystem kann verschlüsselte Datensätze (oder Teile von Datensätzen) an die Rechte-Applikation übermitteln, die die Entschlüsselung durchführt (sofern der Zugriff erlaubt ist). Die entschlüsselten Daten können über das Datenbankmanagementsystem z.B. an die Server-Applikation übermittelt werden oder sie können direkt an die Server-Applikation übermittelt werden. Auch ist es möglich, dass die entschlüsselten Daten über die Server-Applikation an die Client-Applikation übermittelt werden.

Insbesondere ist es eine Weiterbildung, dass die Client-Applikation der Server-Applikation ein Authentisierungstoken übergibt, das von der Rechte-Applikation an den Rechte-Server übermittelt wird, um Zugriff auf die Daten zu erhalten.

Auch ist es eine Weiterbildung, dass die Client-Applikation eine Referenz übergibt, die von der Rechte-Applikation des Servers an den Rechte-Server übermittelt wird, wobei von dem Rechte-Server anhand der Referenz eine Authentisierung angefordert und/oder durchgeführt wird.

Insbesondere ist es eine Weiterbildung, dass die Referenz eine Referenz auf eine Rechte-Applikation des Clients ist.

Ferner ist es eine Weiterbildung, dass die Rechte-Applikation eine Rechte-Applikation einer ersten Umgebung und/oder eine Rechte-Applikation einer zweiten Umgebung ist.

Bei der ersten Umgebung handelt es sich beispielsweise um eine Umgebung einer Firma oder eines Benutzers, also insbesondere einer lokalen Umgebung, auf der die Client-Applikation ablaufen kann und zumindest weitgehend unter der Kontrolle eines Benutzers bzw. einer Benutzergruppe ist.

Hingegen handelt es sich bei der zweiten Umgebung um eine Umgebung der Cloud, z.B. eine Umgebung eines Cloud-Anbieters. Beispielsweise kann es sich bei der zweiten Umgebung um ein öffentlich zugängliches Netzwerk, z.B. das Internet oder einen Teil des Internets handeln. Die zweite Umgebung unterliegt nicht der Kontrolle des Benutzers.

Beispielsweise kann zwischen den Rechten eines Benutzers auf dem lokalen Rechner, auf dem die Client-Applikation abläuft, und den Rechten auf dem Server, auf dem die Server-Applikation abläuft, unterschieden werden. Die jeweiligen Rechte können entsprechend unterschiedlich von Rechte-Applikationen auf Client und Server umgesetzt werden.

Hierbei sei angemerkt, dass der Rechner einen beliebigen Computer, z.B. einen tragbaren Computer oder einen Arbeitsplatzrechner oder aber ein mobiles Endgerät (z.B. Mobiltelefon, Smartphone, digitaler Assistent), Tablet-Computer, etc. bezeichnet. Grundsätzlich kann als Rechner jedes Gerät bezeichnet werden, mit dem "Cloud Computing" möglich ist.

Im Rahmen einer zusätzlichen Weiterbildung ist der Rechte-Server in der ersten Umgebung vorgesehen ist.

So ist es von Vorteil, dass der Rechte-Server in der vertrauenswürdigen Umgebung des Benutzers, der Benutzergruppe oder der Firma ist. Damit kann sichergestellt werden, dass die sicherheitsrelevanten Informationen im Einflussbereich des Benutzers bzw. der Client-Applikation gespeichert sind. Ohne diese Informationen ist ein Zugriff auf geschützte Daten nicht möglich. Dies reduziert in erheblichem Maße das erforderliche Vertrauen, das dem Cloud-Anbieter entgegen gebracht werden muss. Die Rechte-Applikation der Cloud, d.h. des Cloud-Anbieters, kommuniziert z.B. über eine geschützte Verbindung mit dem Rechte-Server, um die Zugriffsinformation zum Zugriff auf die sicherheitsrelevanten in der Cloud abgespeicherten Daten zu erhalten. Auch ein Cloud-Systemadministrator hat ohne diese Zugriffsinformation von dem Rechte-Server keine Möglichkeit, die Daten zu einzusehen.

Eine nächste Weiterbildung besteht darin, dass die Anfrage von der Rechte-Applikation mindestens eine der folgenden Informationen umfasst:
- eine Benutzerinformation,
- eine Rechnerinformation, insbesondere eine Identifikation eines Rechners,
- eine Information zur Identifikation der Daten, auf die zugegriffen werden soll.

Eine Ausgestaltung ist es, dass dem die Zugriffsinformation umfasst:
- eine Rechte-Policy;
- einen Schlüssel zur Entschlüsselung der Daten.

Die Rechte-Policy betrifft eine Vereinbarung, z.B. gemäß einer Notation einer Rechtesprache, wer mit welchen Daten wie lange was machen darf. Dabei können unterschiedliche Aktionen für unterschiedliche Benutzer, Benutzergruppen oder Rechner definiert werden. Auch ist es möglich, dass gemäß der Rechte-Policy, eine Operation auf den Daten ausgeführt werden darf, ohne die Daten vollständig zu lesen (z.B. eine Indizierung von Datensätzen durch den Server).

Eine alternative Ausführungsform besteht darin, dass von dem Rechte-Server basierend auf der Anfrage der Rechte-Applikation geprüft wird, ob ein Zugriff auf die Daten erlaubt ist, indem ein Vergleich mit der zuvor für die Daten angelegten Rechte-Policy durchgeführt wird.

Beispielsweise kann ein Benutzer oder eine Benutzergruppe Daten anlegen und mit bestimmten Rechten für bestimmte Benutzer oder Benutzergruppen versehen. Die sich hieraus ergebende Rechte-Policy wird auf dem Rechte-Server abgelegt. Damit ist sichergestellt, dass bei einem späteren Zugriff nur diejenigen Benutzer oder Rechner auf die Daten zugreifen können, die dafür eine Genehmigung haben. Weiterhin kann auch die Art des Zugriffs auf die Daten anhand der Rechte-Policy definiert bzw. beschränkt werden.

Eine nächste Ausgestaltung ist es, dass die Rechte-Policy mindestens eine der folgenden Informationen umfasst:
- eine Benutzer-, oder Rechnerinformation,
- eine durchführbare Aktion des Benutzers oder Rechners,
- eine für den Benutzer oder Rechner nicht durchführbare Aktion,
- eine Gültigkeitsdauer.

Ein Vorteil besteht darin, dass anhand der Rechte-Policy unterschieden werden kann zwischen Rechten eines Benutzers bzw. eines Rechners des Benutzers und Rechten des Servers. Damit ist eine Verarbeitung der Daten durch den Benutzer möglich ohne hierfür dem Server Rechte einräumen zu müssen.

Weiterhin ist es möglich, mittels der Rechte-Policy auch dem Server bestimmte Rechte einzuräumen, so dass dieser automatisch vorgegebene Aufgaben, z.B. eine Indizierung von Dateien, durchführen kann. Diese Rechte können auf Mindestanforderungen reduziert werden, indem z.B. ein Zugriff nur auf einen Teil der Daten zugelassen wird. Damit wird vorteilhaft die Möglichkeit für einen Missbrauch durch Administratoren der Cloud-Anwendung oder durch sonstige externe Angreifer minimiert.

Auch ist es eine Ausgestaltung, dass die Kommunikation zwischen dem Rechte-Server und der Rechte-Applikation gesichert ist.

Beispielsweise kann die Kommunikation bzw. die Verbindung zwischen Komponenten oder Prozessen durch geeignete kryptographische Verfahren oder Maßnahmen gesichert werden.

Eine Weiterbildung besteht darin, dass von dem Rechte-Server zumindest ein Teil der Anfragen protokolliert wird.

Eine zusätzliche Ausgestaltung ist es, dass die Daten umfassen:
- mindestens ein Dokument;
- mindestens eine Applikation;
- mindestens einen Datenbankeintrag, insbesondere eine Datenbank.

Insbesondere können die Daten vertrauliche oder teilweise vertrauliche oder sonstige schützenswerte Informationen enthalten. Grundsätzlich besteht ein großes Interesse daran, Daten in der Cloud abzuspeichern, weil die Zugänglichkeit z.B. über das Internet von überall aus möglich ist. Auch entfällt das Anlegen von Sicherungskopien bzw. das Portieren von Daten, wenn ein neuer Rechner aufgesetzt wird. Demgegenüber steht der Nachteil, dass einmal im öffentlichen Netz gespeicherte Daten grundsätzlich leichter von Unberechtigten eingesehen, vervielfältigt oder auf eine sonstige Art genutzt werden können als dies bei lokal auf einem Rechner gespeicherten Daten der Fall ist. Hier liefert der vorliegende Ansatz eine Lösung, die Vorteile des Cloud Computing zu nutzen und gleichzeitig einen verstärkten Schutz persönlicher oder sonstiger vertraulicher Daten zu gewährleisten.

Die vorstehende Aufgabe wird auch gelöst mittels einer Vorrichtung zum Zugriff auf in einer Cloud gespeicherte Daten umfassend eine Verarbeitungseinheit, die derart eingerichtet ist, dass
(a) eine Anfrage bezüglich eines Zugriffs auf die Daten von einer Rechte-Applikation an einen Rechte-Server übermittelbar ist,
(b) von dem Rechte-Server basierend auf der Anfrage der Rechte-Applikation prüfbar ist, ob ein Zugriff auf die Daten erlaubt ist,
(c) sofern der Zugriff auf die Daten erlaubt ist, der Rechte-Applikation von dem Rechte-Server eine Zugriffsinformation bereitstellbar ist,
(d) von der Rechte-Applikation der Zugriff auf die Daten durchführbar ist.

Bei der Vorrichtung kann es sich um eine Komponente in der Cloud, insbesondere eine Komponente des Cloud-Anbieters, oder um eine lokale Komponente des Benutzers oder der Firma, der bzw. die den Dienst des Cloud-Anbieters nutzen möchte, handeln. Beispielsweise kann die Vorrichtung ein Server sein, auf dem die Server-Applikation und die Rechte-Applikation des Servers läuft. Auch kann die Vorrichtung ein lokaler Rechner des Benutzers sein, auf dem die Client-Applikation und die Rechte-Applikation des Clients laufen. Ferner ist es eine Option, dass die Vorrichtung ein Rechner ist, auf dem (auch) der Rechte-Server betrieben werden kann. Die Vorrichtung kann z.B. in der vorstehend erläuterten ersten oder zweiten Umgebung angeordnet sein.

Die Verarbeitungseinheit kann insbesondere eine Prozessoreinheit und/oder eine zumindest teilweise festverdrahtete oder logische Schaltungsanordnung sein, die beispielsweise derart eingerichtet ist, dass das Verfahren wie hierin beschrieben durchführbar ist. Besagte Verarbeitungseinheit kann jede Art von Prozessor oder Rechner oder Computer mit entsprechend notwendiger Peripherie (Speicher, Input/Output-Schnittstellen, Ein-Ausgabe-Geräte, etc.) sein oder umfassen.

Die vorstehenden Erläuterungen betreffend das Verfahren gelten für die Vorrichtung entsprechend. Die Vorrichtung kann in einer Komponente oder verteilt in mehreren Komponenten ausgeführt sein. Insbesondere kann auch ein Teil der Vorrichtung über eine Netzwerkschnittstelle (z.B. das Internet) angebunden sein.

Die hierin vorgestellte Lösung umfasst ferner ein Computerprogrammprodukt, das direkt in einen Speicher eines digitalen Computers ladbar ist, umfassend Programmcodeteile die dazu geeignet sind, Schritte des hier beschriebenen Verfahrens durchzuführen.

Weiterhin wird das oben genannte Problem gelöst mittels eines computerlesbaren Speichermediums, z.B. eines beliebigen Speichers, umfassend von einem Computer ausführbare Anweisungen (z.B. in Form von Programmcode) die dazu geeignet sind, dass der Computer Schritte des hier beschriebenen Verfahrens durchführt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung von Ausführungsbeispielen, die im Zusammenhang mit den Zeichnungen näher erläutert werden. Dabei können zur Übersichtlichkeit gleiche oder gleichwirkende Elemente mit gleichen Bezugszeichen versehen sein.

Es zeigen:
- Fig.2: einen schematischen Überblick über Komponenten einer Architektur für ein Dokumentenmanagementsystem;
- Fig.3: einen schematischen Überblick über Komponenten einer Architektur für einen Zugriff auf eine in einer Cloud gespeicherte Datenbank.

Die vorliegende Lösung basiert insbesondere auf einem EDRM-System bzw. stellt eine Erweiterung eines bekannten EDRM-Systems dar. Es wird ein gesicherter Umgang von in einer Cloud gespeicherten Daten vorgeschlagen, wobei es sich um unterschiedliche Arten von Daten handeln kann. Nachfolgend werden beispielhaft die Szenarien Dokumentenmanagementsystem und Datenbank beschrieben, also für den Fall, dass Dokument oder Datenbankeinträge in der Cloud gespeichert werden sollen.

Bei der Cloud handelt es sich gemäß der in der Einleitung genannten Begriffsbestimmung um eine Ressource in einem Netzwerk, z.B. dem Internet, die für eine Vielzahl von Nutzern von unterschiedlichen Stationen bzw. Rechnern (z.B. Personalcomputern, Laptops, mobilen Endgeräten, Smartphones, persönlicher digitaler Assistenten, etc.) via drahtlose oder drahtgebundene Schnittstellen zugänglich ist. Insbesondere umfasst die Cloud Daten (z.B. Dokumente, Datenbanken), Applikationen zum Zugriff auf die Daten sowie Komponenten zur Datensicherheit.

**Fig.2** zeigt einen schematischen Überblick über Komponenten einer Architektur für ein Dokumentenmanagementsystem.

Eine Umgebung 201 entspricht z.B. einer Firmenumgebung, z.B. einem Rechnernetzwerk einer Firma. Eine Cloud 202 kennzeichnet eine Umgebung eines externen Netzwerks, z.B. einem Teil des Internets oder eines Netzwerks, das über das Internet mit der Umgebung 201 verbunden ist. Beispielsweise wird die Cloud 202 von einem externen Dienstanbieter bereit gestellt und ermöglicht einen flexiblen Zugriff auf die in der Cloud gespeicherten Daten oder Programme. Die Daten können auch Teil von Programmen sein, die lokal auf einem Rechner, der mit der Cloud 202 verbunden ist, ablaufen.

In der Cloud 202 ist eine Umgebung 204 enthalten, die einer von einem Dienstanbieter (auch bezeichnet als Cloud-Anbieter) bereitgestellten Anwendungsumgebung entspricht. Die Umgebung 204 umfasst eine Server-Applikation 205 sowie eine Rechte-Applikation 206. Ferner ist in der Cloud ein Datenspeicher 207 (z.B. in Form einer zentralen oder dezentralen Datenbank) vorgesehen.

Innerhalb der Umgebung 201 ist eine Umgebung 203 vorgesehen, die einer individuellen Umgebung eines Nutzers entspricht.

Dabei kann es sich z.B. um einen Computer des Nutzers handeln, der innerhalb der Umgebung 201 eingebunden ist. In der Umgebung 203 sind eine Client-Applikation 208 sowie eine Rechte-Applikation 209 vorgesehen. Außerdem befindet sich innerhalb der Umgebung 201 ein Rechte-Server 210.

Der Nutzer kann mittels der Client-Applikation 208 auf die Server-Applikation 205 der Cloud 202 zugreifen.

Nachfolgend werden die Mechanismen dieses Ansatzes näher erläutert:
Beispielsweise wird eine **Rechte-Policy** (z.B. in Form einer EDRM-Policy-Sprache) eingesetzt, anhand derer z.B. unterschieden werden kann zwischen den Rechten eines Benutzers zur Dokumentenverarbeitung in der Client-Applikation (AppC) und in der Server-Applikation (AppS). Bei der Rechte-Policy handelt es sich z.B. um eine Vereinbarung bestimmter Rechte für bestimmte Applikationen und/oder Benutzer z.B. für eine vorgegebene Zeitdauer.

Die Rechte-Policy kann beispielsweise das folgende Format aufweisen:
Dokument:
**→** Benutzer 1 : Rechte(AppS), Rechte(AppC); Gültigkeitsspanne
**→** Benutzer 2 : Rechte(AppS), Rechte(AppC); Gültigkeitsspanne
**→** Server : Rechte; Gültigkeitsspanne

Somit können für das Dokument für den Benutzer1 und den Benutzer2 sowie den Server jeweils einzelne Rechte vergeben sowie (ggf. zusätzlich) eine Dauer für die Gültigkeit der Rechte vereinbart werden.

Beispielsweise könnte einem Benutzer auf dem lokalen Gerät mit der Client-Applikation 208 nur ein Recht zur Ansicht, nicht aber zum Verändern oder Drucken eingeräumt werden. Eine Bearbeitung des Dokuments durch die Server-Applikation 205 könnte jedoch diesem Benutzer gestattet sein. Die Bearbeitung kann dabei auch umfangreiche Funktionen umfassen, z.B. könnte der Benutzer eine Übersetzung des Dokumentes durch die Server-Applikation 205 veranlassen.

Ein Beispiel für ein Recht, das der Server-Applikation 205 erteilt werden könnte, ist die Indizierung von Dokumenten. Dabei könnte dem Server ein Lesezugriff nur auf jeweils einen bestimmten Abschnitt eines Dokuments, der Schlagwörter enthält, erteilt werden, wobei das ganze Dokument inklusive Schlagwortteil (der selbst sensible Information darstellen kann) geschützt ist.

Welche Rechte zugeteilt werden, hängt z.B. von der Funktionalität der Applikation und deren Architektur ab, insbesondere auch von einer Funktionsaufteilung zwischen der Client-Applikation 208 und der Server-Applikation 205.

Wenn die Bearbeitung eines Dokuments durch einen Benutzer anhand der Client-Applikation 208 stattfindet (d.h. das Dokument in den Speicher des lokalen Geräts und damit in die Umgebung 203 geladen wird), kann es sinnvoll sein, nur die Verarbeitung durch diese Client-Applikation 208 zu erlauben. Wenn das Dokument hingegen von der Server-Applikation 205 verarbeitet wird und die Client-Applikation 208 z.B. nur einzelne Befehle entgegen nimmt und weiterleitet, sind Verarbeitungsrechte des Benutzers ausschließlich für die Server-Applikation 205 sinnvoll. In diesem Fall kann für die Client-Applikation 208 das Recht, Dokumente herunterzuladen zu dürfen, eine Option darstellen.

Die Rechte-Applikation 206 läuft innerhalb der Umgebung 204, z.B. gemeinsam mit der Server-Applikation 205 auf einem Rechner. Die Rechte-Applikation 206 setzt in der Umgebung 204 die Rechte gemäß der Spezifikationen der Rechte-Policy um. Dabei kann es sich um Spezifikationen des Nutzers oder des Servers selbst handeln. Vorzugsweise ist die Rechte-Applikation 206 vor Angriffen geschützt, insbesondere sind Mechanismen vorgesehen, die es erlauben, dass Schlüssel von der Rechte-Applikation 206 mit hoher Sicherheit verwahrt werden können. Beispielsweise kann die Umgebung 204 umfassend die Server-Applikation 205 sowie die Rechte-Applikation 206 als vertrauenswürdig eingestuft sein bzw. können für diese Umgebung 204 Maßnahmen getroffen bzw. vereinbart werden, die eine solche vertrauenswürdige Einstufung rechtfertigen.

Innerhalb der Umgebung 203, z.B. auf einem Gerät des Benutzers, befindet sich die Rechte-Applikation 209 und setzt dort die für die Clientseite spezifizierten Benutzerrechte um. Die Rechte-Applikation 209 ist vorzugsweise (wie die Rechte-Applikation 206) vor Angriffen geschützt und verfügt über Mechanismen, Schlüssel sicher verwahren können.

Die Server-Applikation 205 kommuniziert mit der Client-Applikation 208, wobei die Server-Applikation 205 mit der Rechte-Applikation 206 und die Client-Applikation 208 mit der Rechte-Applikation 209 kommuniziert, um die Verschlüsselung eines Dokuments durchzuführen, die Rechte-Policy zu bestimmen, die Entschlüsselung des Dokuments anzufordern und die spezifizierten Rechte umzusetzen. Zu diesem Zweck sollten die Server-Applikation 205 als auch die Client-Applikation 208 vertrauenswürdig ausgeführt sein. Dies kann erreicht werden, indem die Server-Applikation 205 und die Client-Applikation 208, bzw. deren Aktionen, jeweils signiert werden, d.h. eine Signatur erstellt wird, die von der Rechte-Applikation 206 bzw. von der Rechte-Applikation 209 geprüft wird.

Der Rechte-Server 210 ist vorzugsweise dazu eingerichtet, die Rechte-Policy (bzw. Dateien, die die Rechte-Policy umfassen) und die Verschlüsselungsschlüssel von geschützten Dokumenten zu verwalten. Weiterhin kommuniziert der Rechte-Server 210 mit der Rechte-Applikation 209 und der Rechte-Applikation 206. Insbesondere ist der Rechte-Server 210 für zwei Clients, also im Beispiel die beiden Rechte-Applikationen 209 und 206 ausgelegt.

Der hier vorgeschlagene Ansatz basiert auf einem bzw. erweitert ein EDRM-System und gewährleistet einen wirksamen Schutz vor unerlaubtem Zugriff auf Dokumente. Vorzugsweise authentifiziert sich hierfür ein Benutzer bei einer Webapplikation, wobei eine ausreichend hohe Sicherheit von Passwörtern durch eine bestimmte Komplexität der Passwörter sowie eine begrenzte erlaubte Nutzungsdauer erreicht werden kann. Weiterhin kann verlangt werden, dass nach dem Ablauf einer Anwendung (Session), der Benutzer erneut ein Passwort eingeben muss. Auch können andere oder zusätzliche Authentifizierungsmechanismen vorgesehen sein, z.B. mittels biometrischer Verfahren. Ferner kann ein Zugriff auf bestimmte Dokumente mit unterschiedlich starker Authentifizierung ermöglicht werden; beispielsweise könnte ein Zugriff auf besondere Dokumente nur mit einer zusätzlichen Authentifizierung mittels einer Smartcard erlaubt sein.

Vorzugsweise sind die für die Authentifizierung benötigten Informationen dem Rechte-Server 210 bekannt und können vorteilhaft eindeutig dem richtigen Benutzer zugeordnet werden. Dies kann z.B. dadurch erreicht werden, dass ein Identitätsmanagement der Cloud-Applikation mit einem Identitätsmanagement des Unternehmens, das Eigentümer der Dokumente ist, gekoppelt wird.

Auch sollte gewährleistet sein, dass die Kommunikation zwischen dem Rechte-Server 210 und den beiden Rechte-Applikationen 209 und 206 sicher ist; dies kann mit geeigneten bekannten kryptographischen Funktionalitäten erreicht werden.

Nachfolgend wird beispielhaft eine Erstellung eines neuen Dokuments beschrieben:
(1) Ein Benutzer authentisiert sich bei der Client-Applikation 208 und gibt dabei seine Identitäts- und Authentisierungsinformationen an. Anhand der Identitäts- und Authentisierungsinformationen authentisiert sich die Client-Applikation 208 bei der Server-Applikation 205.
(2) Der Benutzer erstellt ein Dokument mit Hilfe der Client-Applikation 208 und der Server-Applikation 205.
(3) Der Benutzer spezifiziert als Eigentümer oder Autor des Dokuments eine Rechte-Policy für das Dokument z.B. mit Hilfe einer graphischen Benutzeroberfläche der Client-Applikation 208 (oder alternativ mit Hilfe oder zumindest Beteiligung der Server-Applikation 205).
(4) Der Benutzer gibt an, dass das Dokument gemäß der von ihm festgelegten Rechte-Policy geschützt werden soll. Es erfolgt eine Verschlüsselung des Dokuments, je nach Architektur der Anwendung, anhand der Rechte-Applikation 209 oder der Rechte-Applikation 206.
(5) Die Rechte-Policy wird zusammen mit dem Verschlüsselungsschlüssel an den Rechte-Server 210 übermittelt. Es wird ein Protokolleintrag generiert, der beispielsweise mindestens die folgenden Einträge enthält: Autor (Benutzername), Referenz auf das Dokument, Referenz auf die Rechte-Policy, Datum und Zeit.

Auf ein existierendes Dokument kann beispielsweise wie nachfolgend beschrieben zugegriffen werden:
(1) Ein Benutzer authentisiert sich bei der Client-Applikation 208 und gibt dabei seine Identitäts- und Authentisierungsinformationen an. Anhand der Identitäts- und Authentisierungsinformationen authentisiert sich die Client-Applikation 208 bei der Server-Applikation 205.
(2) Der Benutzer will über die Client-Applikation 208 oder über die Server-Applikation 205 auf ein bestimmtes Dokument zugreifen (z.B. es öffnen). Die Applikation 208 und/oder 205 lädt dazu das Dokument aus dem Datenspeicher 207.
(3) Je nach Architektur der Applikation kann das Dokument von der Rechte-Applikation 206 oder von der Rechte-Applikation 209 behandelt werden:
   Variante 1: Behandlung durch die Rechte-Applikation 206 (auf Server-Seite):
      (a) Die Rechte-Applikation 206 kontaktiert den Rechte-Server 210 unter Angabe des Benutzers und des Dokuments.
      (b) Hat der angegebene Benutzer laut der Rechte-Policy die erforderliche Berechtigung für das Dokument, erhält die Rechte-Applikation 206 von dem Rechte-Server 210 ein Rechteobjekt mit der Rechte-Policy und dem Entschlüsselungsschlüssel für das Dokument. Der Rechte-Server 210 erzeugt einen Protokolleintrag, der mindestens folgende Angaben enthält: Zugriff (Benutzer, Dokument, Rechte-Policy, Datum und Zeit).
      (c) Die Rechte-Applikation 206 entschlüsselt das Dokument und leitet es an die Server-Applikation 205 weiter. Bei einer Aktion des Benutzers fragt die Server-Applikation 205 zuerst bei der Rechte-Applikation 206 nach, ob diese Aktion gemäß der Rechte-Policy erlaubt ist.
   Variante 2: Behandlung durch die Rechte-Applikation 209 (auf Client-Seite):
      (a) Die Rechte-Applikation 209 kontaktiert den Rechte-Server 210 unter Angabe des Benutzers und des Dokuments, und einer Referenz auf die verwendete Client-Applikation 208.
      (b) Hat der Benutzer laut der Rechte-Policy die erforderlichen Rechte für das Dokument, erhält die Rechte-Applikation 209 von dem Rechte-Server 210 ein Rechteobjekt mit der Rechte-Policy und dem Entschlüsselungsschlüssel für das Dokument. Der Rechte-Server 210 erzeugt einen Protokolleintrag, der mindestens folgende Angaben enthält: Zugriff (Benutzer, Dokument, Rechte-Policy, Datum und Zeit).
      (c) Die Rechte-Applikation 209 entschlüsselt das Dokument und leitet es an die Client-Applikation 208 weiter. Bei einer Aktion des Benutzers fragt die Client-Applikation 208 zuerst bei der Rechte-Applikation 209 an, ob diese Aktion laut der Rechte-Policy erlaubt ist.

Die vorliegende Lösung ermöglicht eine feinstufige Zugriffskontrolle auf Daten oder Applikationen, die von einer Cloud bereitgestellt werden, insbesondere für dokumentenbasierte Applikationen. Dabei besteht die Möglichkeit, dass der Zugriff unter der Aufsicht eines Eigentümers der Daten oder Applikationen erfolgt.

Ein Vorteil besteht darin, dass mittels der Rechte-Policy eines Dokuments unterschieden werden kann zwischen Rechten eines Benutzers und Rechten des Servers. Damit ist die Online-Verarbeitung durch den Benutzer möglich ohne dem Server hierfür Rechte einräumen zu müssen. Die Online-Verarbeitung durch den Benutzer setzt die Authentisierung des Benutzers voraus und wird auch mit Referenz auf den Benutzer (z.B. auf dem Rechte-Server) protokolliert.

Weiterhin ist es möglich, mittels der Rechte-Policy auch dem Server bestimmte Rechte einzuräumen, so dass dieser automatisch vorgegebene Aufgaben, z.B. eine Indizierung von Dateien, durchführen kann. Diese Rechte können auf Mindestanforderungen reduziert werden, indem z.B. ein Zugriff nicht auf das ganze Dokumente zugelassen wird, sondern nur auf einen Abschnitte des Dokuments eingegrenzt wird. Damit wird die Möglichkeit für einen Missbrauch durch Administratoren der Cloud-Anwendung oder durch sonstige externe Angreifer minimiert.

Auch kann zwischen den Rechten eines Benutzers auf dem lokalen Rechner, auf dem die Client-Applikation abläuft, und auf dem Server, auf dem die Server-Applikation abläuft, unterschieden werden. Diese Rechte werden entsprechend von Rechte-Applikationen auf Client und Server umgesetzt.

Somit ist es von Vorteil, dass der Eigentümer der Daten eine Kontrolle über die Verwendung seiner Daten auch auf fremden Computersystemen ausüben kann. So kann eine Kontrolle über Dokumente erfolgen, die von Cloud-Anwendungen verarbeitet werden. Eine derartige Kontrolle wird insbesondere durch die folgenden Eigenschaften erreicht:
- Der Zugriff (Entschlüsselung) auf das Dokument durch die Server-Applikation erfolgt nur dann, wenn ein authentisierter und laut Rechte-Policy berechtigter Benutzer auf das Dokument zugreift oder wenn ein Server Aufgaben durchführt, die diesem explizit durch die Rechte-Policy zugeteilt bzw. erlaubt wurden. Jeder Zugriff kann auf dem Rechte-Server entsprechend protokolliert werden; insbesondere wird in einem Protokolleintrag die Identität des Benutzers bzw. des Servers gespeichert.
- Die Rechte-Applikationen des Servers bzw. des Clients schützen den erhaltenen Entschlüsselungsschlüssel und wehren Angriffe durch Systemadministratoren oder sonstige Benutzer ab.
- Während des Transports und bei der Datenhaltung ist das Dokument durch eine Verschlüsselung geeignet geschützt, der Entschlüsselungsschlüssel ist lediglich derjenigen Applikation bekannt, die unter der Kontrolle des Eigentümers des Dokuments ist.

Die korrekte Authentisierung von Benutzern ist eine wesentliche Voraussetzung für die sichere Zugriffskontrolle. Vorzugsweise liegt die Kontrolle über die Authentisierung bei der jeweiligen Applikation. Insbesondere kann die Authentisierung mittels des Rechte-Servers erfolgen. Wenn der Eigentümer den Rechte-Server betreibt, liegt die Kontrolle über die Authentisierung genauso in seiner Kontrolle wie die Zugriffsrechte.

### Variante 1:

Zur Authentisierung bei der Server-Applikation 205 verwendet der Benutzer ein kryptographisches Authentisierungstoken, das z.B. von dem Unternehmen des Benutzers oder von einem Dienstanbieter ausgestellt wurde. Wenn der Benutzer auf ein geschütztes Dokument zugreifen möchte übergibt die Server-Applikation 205 dieses Authentisierungstoken an den Rechte-Server 210, der das Authentisierungstoken überprüft.

Dies hat den Vorteil, dass nicht der Server-Applikation 205 in der Cloud 202 dahingehend vertraut werden muss, dass die Authentisierung korrekt umgesetzt wird. Vielmehr wird dem Aussteller des Authentisierungstokens (hier dem Unternehmen oder dem Dienstanbieter) vertraut. Die Entscheidung, wem vertraut werden soll, liegt beim Betreiber des Rechte-Servers.

### Variante 2:

Die Authentisierung wird von dem Rechte-Server 210 angefordert:
(1) Ein Benutzer authentisiert sich mittels der Client-Applikation 208 bei der Server-Applikation 205 und gibt dabei zusätzlich zu seiner Identitäts- und Authentisierungsinformationen eine Referenz zu seiner Rechte-Applikation 209 an.
(2) Sofern der Benutzer über die Server-Applikation 205 auf ein geschütztes Dokument zugreifen möchte, werden die folgenden Schritte durchgeführt:
   (a) Die Server-Applikation 205 kontaktiert den Rechte-Server 210 unter Angabe des Benutzers, des Dokuments und der Referenz auf die Rechte-Applikation 209 des Benutzers.
   (b) Der Rechte-Server 210 kontaktiert die Rechte-Applikation 209 mit der Aufforderung, den Benutzer zu authentisieren. Der Rechte-Server 210 überprüft die Authentisierung, z.B. mittels einer Kopplung an ein Identitätsmanagement des Unternehmens.
(3) Wenn der Benutzer anhand der Client-Applikation 208 auf ein geschütztes Dokument zugreifen möchte, werden die folgenden Schritte durchgeführt:
   (a) Die lokale Rechte-Applikation 209 des Benutzers kontaktiert den Rechte-Server 210.
   (b) Der Rechte-Server 210 antwortet mit der Aufforderung an den Benutzer zur Authentisierung. Diese wird von dem Rechte-Server 210 geprüft.

### Datenbank-basierte Applikation

Auch ist es möglich, dass Datenbank-basierte Applikationen in der Cloud bereit gestellt und/oder betrieben werden. Auch für solche Applikationen soll eine hohe Sicherheit und Kontrolle über die Daten erreicht werden.

Vorzugsweise wird hierfür eine EDRM-Rechtesprache für Datenbanken eingesetzt, mit der Zugriffsrechte auf Daten in einer Datenbank in Form einer Rechte-Policy spezifiziert werden können. Dazu kann die EDRM-Rechtesprache entsprechende Sprachkonstrukte bereitstellen, mit denen beschrieben werden kann, auf welche Daten (z.B. Objekte, Tupel, Attribute) ein Benutzer bzw. ein Rechner (des Benutzers oder ein Server) Zugriff hat. Ein solches Sprachkonstrukt kann auch als RL-Ausdruck bezeichnet werden.

Beispiele: Ein Benutzer darf auf ein Kreditkartennummer-Attribut aller Tupel zugreifen, oder der Benutzer darf nur auf das Kreditkartennummer-Attribut der Tupel zugreifen, die ihm zugeordnet sind.

Die Rechte-Policy kann die Benutzer mit deren jeweiliger Zugriffsberechtigung enthalten und für jeden Benutzer angeben, auf welche Datenbank-Einträge er zugreifen darf. Dabei können verschiedene Rechte für unterschiedliche Aktionen, z.B. zum Betrachten eines Datenbankeintrags oder zum Verändern des Datenbankeintrags, vereinbart werden. Statt des Benutzers kann auch ein Rechner des Benutzers identifiziert werden bzw. sich authentisieren.

Auch kann ein Server Zugriffsrechte erhalten, die z.B. für automatisch ablaufende Prozesse benötigt werden, z.B. für eine Stichwortsuche in Patientenakten ohne Zugriff auf Namen oder Adresse des jeweiligen Patienten.

Damit kann die Rechte-Policy beispielsweise wie folgt notiert werden:
Datenbank :
**→** Benutzer 1 :
   RL-Ausdruckl - Aktion(en) - Gültigkeitsspanne
   RL-Ausdruck2 - Aktion(en) - Gültigkeitsspanne
**→** Benutzer2 :
   RL-Ausdruck3 - Aktion(en) - Gültigkeitsspanne
   RL-Ausdruck4 - Aktion(en) - Gültigkeitsspanne
**→** Server :
   RL-AusdruckN - Aktion(en) - Gültigkeitsspanne
   RL-AusdruckN+1 - Aktion(en) - Gültigkeitsspanne

Der Begriff "Aktion(en)" steht dabei für eine Menge von Rechten, die einem Benutzer bzw. einem Rechner des Benutzers oder einem Server zugeordnet werden. Beispielsweise können (benutzer-, rechner- und/oder zeitabhängig) Rechte zum
- Ansehen,
- Editieren,
- Löschen,
- Hinzufügen,
- etc.
von Daten(sätzen) vereinbart werden. Auch können weitere datenbankspezifische Aktionen mit Rechten belegt werden, z.B. dem Recht, Fremdschlüsselbeziehungen zu verfolgen.

**Fig.3** zeigt einen schematischen Überblick über Komponenten einer Architektur für einen Zugriff auf eine in einer Cloud 301 gespeicherte Datenbank 302.

Eine Umgebung 307 entspricht z.B. einer Firmenumgebung, z.B. einem Rechnernetzwerk einer Firma. Die Cloud 301 kennzeichnet eine Umgebung eines externen Netzwerks, z.B. eines Teils des Internets oder eines Netzwerks, das über das Internet mit der Umgebung 307 verbunden ist. Beispielsweise wird die Cloud 301 von einem externen Dienstanbieter bereit gestellt und ermöglicht einen flexiblen Zugriff auf die in der Cloud gespeicherten Daten oder Programme, insbesondere die Datenbank 302.

In der Cloud 301 ist eine Umgebung 303 enthalten, die einer von einem Dienstanbieter bereitgestellten Anwendungsumgebung entspricht. Die Umgebung 303 umfasst eine Datenbank-Applikation 305 sowie eine Rechte-Applikation 306.

Innerhalb der Umgebung 307 ist eine Umgebung 308 vorgesehen, die einer individuellen Umgebung eines Nutzers entspricht. Dabei kann es sich z.B. um einen Computer des Nutzers handeln, der innerhalb der Umgebung 307 eingebunden ist. In der Umgebung 308 ist eine Client-Applikation 309 vorgesehen. Außerdem befindet sich innerhalb der Umgebung 307 ein Rechte-Server 304.

Der Nutzer kann mittels der Client-Applikation 309 auf die Datenbank-Applikation 305 der Cloud 301 zugreifen.

Die Rechte-Applikation 306 setzt die in der Rechte-Policy spezifizierten Rechte für den Zugriff auf die Datenbank 302 für Benutzer und Server um. Die Rechte-Applikation 306 und die Datenbank-Applikation 305 können auf einem gemeinsamen Rechner ablaufen, insbesondere können diese in der gleichen (sicheren) Umgebung untergebracht sein. Vorzugsweise ist die Rechte-Applikation 306 geeignet vor Angriffen geschützt und so eingerichtet, dass Schlüssel sicher verwahrt werden können.

Die Datenbank 302 umfasst die mittels eines Datenbankmanagementsystems eine Funktionalität, Datensätze oder Teile von Datensätzen (z.B. Attribute oder Tupel) zu verschlüsseln, und stellt der Rechte-Applikation 306 eine Schnittstelle bereit, über die eine Entschlüsselung von Daten der Datenbank angefordert werden kann. Weiterhin setzt die Datenbank 302 Rechte gemäß der Rechte-Policy um, d.h. erlaubt z.B. kein Editieren von Daten sofern der entsprechende Benutzer kein Recht dazu hat. Zu diesem Zweck ist das Datenbankmanagementsystem vertrauenswürdig ausgeführt. Beispielsweise kann das Datenbankmanagementsystem bzw. Aktionen desselben jeweils mit einer Signatur versehen werden und von der Rechte-Applikation 306 kann die Signatur entsprechend überprüft werden.

Der Rechte-Server 304 verwaltet die (Dateien der) Rechte-Policy und die Verschlüsselungsschlüssel von geschützten Daten und kommuniziert mit der Rechte-Applikation 306.

Es sei nochmals ausdrücklich darauf hingewiesen, dass es sich bei dem Benutzer um einen tatsächlichen Benutzer oder eine Benutzergruppe mit Zugangs- und/oder Zugriffsrechten handeln kann. Auch kann der Benutzer ein Rechner (eines Benutzers) sein, der über eine entsprechend Identifikation verfügen kann. Auch der Server kann wie ein Rechner bzw. ein Benutzer über bestimmte vorgebbare Zugriffsrechte verfügen bzw. mit solchen ausgestattet werden.

Die Erzeugung geschützter Daten kann wie folgt beschrieben werden:
(1) Der Benutzer authentisiert sich bei der Datenbank-Applikation 305 anhand der Client-Applikation 309, z.B. einer Webanwendung, die in einem Webbrowser läuft.
(2) Der Benutzer spezifiziert, z.B. über eine graphische Benutzerschnittstelle der Client-Applikation 309, eine Rechte-Policy, die die Zugriffsrechte verschiedener Benutzer bzw. des Servers auf verschiedene Daten (Attribute, Objekte und/oder Tupel) der Datenbank 302 beschreibt. Die Rechte-Policy bezieht sich beispielsweise auf mindestens eine Datenbank 302 in der Cloud 301, so dass die Rechte-Policy eine Referenz auf diese Datenbank 302 umfassen kann. Die Rechte-Policy wird auf dem Rechte-Server 304 hinterlegt.
(3) Der Benutzer ergänzt über die Client-Applikation 309 sowie die Datenbank-Applikation 305 Daten in der Datenbank 302 und spezifiziert dass diese Daten gemäß der Rechte-Policy geschützt werden sollen. Die Rechte-Applikation 306 führt die Verschlüsselung der Daten mit Referenz auf die Rechte-Policy durch.
(4) Die Rechte-Policy wird zusammen mit dem Verschlüsselungsschlüssel an den Rechte-Server 304 geschickt. Es wird ein Protokolleintrag erzeugt, der mindestens folgende Einträge enthält: Erzeugen der Daten, Autor (Benutzername), Referenz auf die Daten, Referenz auf die Rechte-Policy, Datum und Zeit.

Der Zugriff auf bzw. die Verwendung von geschützten Daten kann wie folgt beschrieben werden:
(1) Ein Benutzer authentisiert sich bei der Datenbank-Applikation 305 unter Verwendung der Client-Applikation 309.
(2) Der Benutzer ruft über die Client-Applikation 309 eine Funktion der Datenbank-Applikation 305 auf. Die Datenbank-Applikation 305 erzeugt einen entsprechenden Datenbankaufruf (z.B. eine SQL-Anfrage) umfassend die Identität des anfragenden Benutzers, um die Rechte entsprechend zu prüfen.
(3) Wenn die Datenbankanfrage auf geschützte Einträge gerichtet ist oder solche umfasst, erzeugt die Datenbank 302 (mittels ihres Datenbankmanagementsystems) eine Anfrage an die Rechte-Applikation 306 zur Entschlüsselung.
(4) Die Rechte-Applikation 306 prüft durch Abfrage bei dem Rechte-Server 304, ob der Benutzer gemäß der Rechte-Policy über die entsprechende Zugriffsberechtigung verfügt und - sofern dies der Fall ist - gibt die unverschlüsselten Daten zurück.
(5) Wenn ein Funktionsaufruf zu Veränderungen von Datenbankaufrufen führt, erzeugt die Datenbank 302 (mittels ihres Datenbankmanagementsystems) ebenfalls eine Anfrage an die Rechte-Applikation 306 um festzustellen, ob der entsprechende Benutzer Editierrechte für den Eintrag hat.

Vorzugsweise kann jeder (versuchte) Zugriff auf einen (geschützten) Datenbankeintrag auf dem Rechte-Server 304 protokolliert werden.

Wie vorstehend erläutert wurde, ist sicherzustellen, dass die Authentisierung des Benutzers ausreichend sicher ist und ggf. mit unterschiedlichen Sicherheitsstufen für unterschiedlich sicherheitsrelevante Daten versehen ist. Beispielsweise kann nach Ablauf einer Datenbanksitzung oder nach Ablauf einer vorgegebenen Zeitdauer eine erneute Authentisierung erforderlich werden.

Insbesondere ist sicherzustellen, dass der Rechte-Server 304 mit der Rechte-Applikation 306 sicher kommunizieren kann. Die Kommunikation zwischen der Server-Applikation 305 und der Datenbank 302 sollte ebenfalls gesichert sein. Ebenso sollte die Kommunikation zwischen der Client-Applikation 309 und der Server-Applikation 305 gesichert erfolgen. Für die sichere Kommunikation können geeignete bekannte kryptographische Verfahren eingesetzt werden.

Der hier vorgeschlagene Zugriffsschutz für Datenbank-basierte Applikationen ermöglicht es Unternehmen, durchgängige Zugriffskontrolle für Daten aus ihrem Verantwortungsbereich durchzusetzen, auch wenn die Daten selbst in Datenbanken in der Cloud gespeichert sind und von Anwendungen in der Cloud verwendet bzw. verwaltet werden. Die Zugriffskontrolle kann genau und detailliert spezifiziert werden, z.B. auf Basis oder unter Berücksichtigung von
- Attributen, Tupeln und/oder Objekten der Datenbank,
- zugriffsberechtigten Personen oder Gruppen,
- erteilten Rechten und/oder
- einem Gültigkeitszeitraum.

Eine Option besteht darin, für die Datenbank-Applikation 305 und die Client-Applikation 309 getrennt Rechte zu vergeben. Damit kann gezielt beeinflusst werden, ob z.B. geschützte Daten schon bereits von der Server-Applikation 305 durch die Datenbank 302 im Auftrag des Benutzers entschlüsselt werden dürfen, oder ob diese Entschlüsselung erst in der Umgebung 308 erfolgen darf, z.B. durch die Client-Applikation 309, die zu diesem Zweck mit einer zusätzlichen Rechte-Applikation in der Umgebung 308 kommuniziert (siehe hierzu Fig.2 mit zugehöriger Erläuterung). Diese zusätzliche Rechte-Applikation stellt dabei in der Umgebung 308 (z.B. dem lokalen Rechner des Benutzers) eine Funktionalität entsprechend der Funktionalität der Rechte-Applikation 306 zur Verfügung.

Beispielsweise darf eine Kreditkartennummer des Benutzers erst lokal auf seinem Rechner entschlüsselt werden; in der Umgebung 303 würde die Entschlüsselung der Kreditkartennummern zwar von der Rechte-Applikation 308 geschützt, aber Hacker könnten versuchen, bereits in der Umgebung 303 während der Entschlüsselung Zugriff auf die Daten zu erlangen. Je nach Angriffsszenario könnte es jedoch als sicherer betrachtet werden, die Entschlüsselung erst in der Umgebung 308 lokal bei dem Benutzer durchzuführen.

Es wird daher insbesondere vorgeschlagen, eine bekannte digitale Rechteverwaltung (EDRM: Enterprise Digital Rights Management) so zu erweitern, dass eine Kontrolle über den Zugriff von Daten, die in einer Cloud gespeichert sind, bei dem Benutzer bzw. Ersteller der Daten verbleibt. Dazu ist eine Abstimmung der Zugriffsinformationen zwischen einer Rechte-Applikation in der Cloud mit einem Rechte-Server in dem Bereich des Benutzers (also außerhalb der Cloud) von Vorteil. Mittels einer Rechte-Policy ist es möglich, feingranular den Zugriff für Benutzer(gruppen), Rechner (Client, Server) sowie Gültigkeitsdauern zu regeln. Der Zugriff umfasst dabei unterschiedlichste mit den Daten durchführbare Aktionen. Insbesondere ist es von Vorteil, dass eine Server-Applikation einen (zeitlich begrenzten) Zugriff auf einen Teil der Daten erhält, um diese z.B. zu Indizieren, ohne dass der Server dabei auf die vollständigen Inhalte der Daten zugreifen kann. Der Ansatz funktioniert beispielsweise für Dokumentenmanagement als auch für in der Cloud ausgelagerte Datenbanken. Die Erfindung kann für jede Art der verteilten Datenverarbeitung eingesetzt werden, in der die Daten vor unberechtigten Zugriffen geschützt werden sollen.

Obwohl die Erfindung im Detail durch das mindestens eine gezeigte Ausführungsbeispiel näher illustriert und beschrieben wurde, so ist die Erfindung nicht darauf eingeschränkt und andere Variationen können vom Fachmann hieraus abgeleitet werden, ohne den Schutzumfang der Erfindung zu verlassen.
1. Verfahren zum Zugriff auf in einer Cloud gespeicherte Daten,
   (a) bei dem eine Anfrage bezüglich eines Zugriffs auf die Daten von einer Rechte-Applikation an einen Rechte-Server übermittelt wird,
   (b) bei dem von dem Rechte-Server basierend auf der Anfrage der Rechte-Applikation geprüft wird, ob ein Zugriff auf die Daten erlaubt ist,
   (c) bei dem, sofern der Zugriff auf die Daten erlaubt ist, der Rechte-Applikation von dem Rechte-Server eine Zugriffsinformation bereitgestellt wird,
   (d) bei dem von der Rechte-Applikation der Zugriff auf die Daten durchgeführt wird.
2. Verfahren nach Ausführungsform 1, bei dem vor dem Schritt (a) eine Client-Applikation bei einer Server-Applikation au- thentisiert wird.
3. Verfahren nach Ausführungsform 2, bei dem die RechteApplikation den Zugriff auf die Daten durchführt und an die Server-Applikation weiterleitet.
4. Verfahren nach einer der Ausführungsformen 2 oder 3, bei dem die Client-Applikation der Server-Applikation ein Authentisierungstoken übergibt, das von der Rechte-Applikation an den Rechte-Server übermittelt wird, um Zugriff auf die Daten zu erhalten.
5. Verfahren nach einer der Ausführungsformen 2 bis 4, bei dem die Client-Applikation eine Referenz übergibt, die von der Rechte-Applikation des Servers an den Rechte-Server übermittelt wird, wobei von dem Rechte-Server anhand der Referenz eine Authentisierung angefordert und/oder durchgeführt wird.
6. Verfahren nach Ausführungsform 5, bei dem die Referenz eine Referenz auf eine Rechte-Applikation des Clients ist.
7. Verfahren nach einer der vorhergehenden Ausführungsformen, bei dem die Rechte-Applikation eine Rechte-Applikation einer ersten Umgebung und/oder eine Rechte-Applikation einer zweiten Umgebung ist.
8. Verfahren nach Ausführungsform 7, bei dem der Rechte-Server in der ersten Umgebung vorgesehen ist.
9. Verfahren nach einer der vorhergehenden Ausführungsformen, bei dem die Anfrage von der Rechte-Applikation mindestens eine der folgenden Informationen umfasst:
   - eine Benutzerinformation,
   - eine Rechnerinformation, insbesondere eine Identifikation eines Rechners,
   - eine Information zur Identifikation der Daten, auf die zugegriffen werden soll.
10. Verfahren nach einer der vorhergehenden Ausführungsformen, bei dem die Zugriffsinformation umfasst:
   - eine Rechte-Policy;
   - einen Schlüssel zur Entschlüsselung der Daten.
11. Verfahren nach Ausführungsform 10, bei dem von dem RechteServer basierend auf der Anfrage der Rechte-Applikation geprüft wird, ob ein Zugriff auf die Daten erlaubt ist, indem ein Vergleich mit der zuvor für die Daten angelegten Rechte-Policy durchgeführt wird.
12. Verfahren nach einer der Ausführungsformen 10 oder 11, bei dem die Rechte-Policy mindestens eine der folgenden Informationen umfasst:
   - eine Benutzer-, oder Rechnerinformation,
   - eine durchführbare Aktion des Benutzers oder Rechners,
   - eine für den Benutzer oder Rechner nicht durchführbare Aktion,
   - eine Gültigkeitsdauer.
13. Verfahren nach einer der vorhergehenden Ausführungsformen, bei dem die Kommunikation zwischen dem Rechte-Server und der Rechte-Applikation gesichert ist.
14. Verfahren nach einer der vorhergehenden Ausführungsformen, bei dem von dem Rechte-Server zumindest ein Teil der Anfragen protokolliert wird.
15. Verfahren nach einer der vorhergehenden Ausführungsformen, bei dem die Daten umfassen:
   - mindestens ein Dokument;
   - mindestens eine Applikation;
   - mindestens einen Datenbankeintrag, insbesondere eine Datenbank.
16. Vorrichtung zum Zugriff auf in einer Cloud gespeicherte Daten umfassend eine Verarbeitungseinheit, die derart eingerichtet ist, dass
   (a) eine Anfrage bezüglich eines Zugriffs auf die Daten von einer Rechte-Applikation an einen Rechte-Server übermittelbar ist,
   (b) von dem Rechte-Server basierend auf der Anfrage der Rechte-Applikation prüfbar ist, ob ein Zugriff auf die Daten erlaubt ist,
   (c) sofern der Zugriff auf die Daten erlaubt ist, der Rechte-Applikation von dem Rechte-Server eine Zugriffsinformation bereitstellbar ist,
   (d) von der Rechte-Applikation der Zugriff auf die Daten durchführbar ist.

## Patentansprüche

1. System, umfassend:
einen Server, der in einer lokalen Umgebung angeordnet ist und eine Zugriffs-Policy speichert, wobei der Server umfasst:
einen Prozessor; und
einen Speicher, der Anweisungen speichert, die, wenn sie von dem Prozessor ausgeführt werden, den Prozessor veranlassen, Schritte durchzuführen, die umfassen:
Empfangen einer Anfrage von einer Rechte-Applikation, die in einer Cloud-Umgebung bereitgestellt wird, für eine anfragende Anwendung, die in der Cloud-Umgebung bereitgestellt wird, auf Zugriff auf in der Cloud-Umgebung gespeicherte Daten;
Identifizieren eines ersten Satzes von Zugriffsrechten basierend auf der Zugriffs-Policy und der anfragenden Anwendung, wobei der erste Satz von Zugriffsrechten einen Zugriff auf die Daten durch die anfragende Anwendung definiert; und
Übertragen des ersten Satzes von Zugriffsrechten an die Rechte-Applikation, wobei die Rechte-Applikation so konfiguriert ist, dass sie der anfragenden Anwendung den Zugriff auf die Daten in Übereinstimmung mit dem ersten Satz von Zugriffsrechten erlaubt.

2. System nach Anspruch 1, wobei das Empfangen der Anfrage von der anfragenden Anwendung das Empfangen eines Authentifizierungstokens umfasst, das der anfragenden Anwendung zugeordnet ist, wobei die Schritte ein Verifizieren des Authentifizierungstokens umfassen.

3. System nach Anspruch 1, wobei die Schritte, als Reaktion auf den Empfang der Anfrage, das Erzeugen eines mit der Anfrage verbundenen Protokolleintrags umfassen.

4. System nach Anspruch 3, wobei der Protokolleintrag ein Anfragedatum, mit der Anfrage verknüpfte Daten oder einen Satz von mit der Anfrage verknüpften Rechten oder eine Kombination davon umfasst.

5. Das System nach Anspruch 1, wobei die in der Cloud-Umgebung gespeicherten Daten verschlüsselt sind.

6. System nach Anspruch 5, wobei die Schritte umfassen:
Übertragen eines Entschlüsselungsschlüssels an die Rechte-Applikation, wobei der Entschlüsselungsschlüssel von der Rechte-Applikation zum Entschlüsseln der verschlüsselten Daten verwendet wird.

7. System nach Anspruch 1, wobei der erste Satz von Zugriffsrechten nach einer vorgegebenen Zeitdauer abläuft.

8. System nach Anspruch 1, wobei die Daten ein Objekt, ein Attribut oder ein Tupel oder eine Kombination davon umfassen.

9. System nach Anspruch 1, wobei der erste Satz von Zugriffsrechten ein Suchindexierungsrecht, ein Dokumentkonvertierungsrecht oder ein Dokumentbearbeitungsrecht oder eine Kombination davon umfasst.

10. Das System nach Anspruch 1, wobei:
die lokale Umgebung unter der Kontrolle eines Benutzers ist; und
die Cloud-Umgebung ein öffentlich zugängliches Netzwerk ist und nicht der Kontrolle des Benutzers unterliegt.

11. Verfahren, umfassend:
Übertragen, von einer Rechte-Applikation, die in einer Cloud-Umgebung bereitgestellt wird, einer Anfrage für eine anfragende Anwendung auf Zugriff auf Daten, die in der Cloud-Umgebung gespeichert sind, an einen Server, der in einer lokalen Umgebung angeordnet ist, wobei der Server eine Zugriffs-Policy speichert, die einen ersten Satz von Zugriffsrechten umfasst, die den Zugriff auf die Daten durch die anfragende Anwendung definieren;
Empfangen des ersten Satzes von Zugriffsrechten von dem Server; und
Ermöglichen des Zugriffs der anfragenden Anwendung auf die Daten in Übereinstimmung mit dem ersten Satz von Zugriffsrechten.

12. Verfahren nach Anspruch 11, umfassend:
Übertragen, vor dem Übertragen der Anfrage, der Zugriffs-Policy und eines Entschlüsselungsschlüssels an den Server, wobei der Entschlüsselungsschlüssel zum Entschlüsseln eines verschlüsselten Teils der Daten konfiguriert ist.

13. Verfahren nach Anspruch 12, umfassend:
Empfangen des Entschlüsselungsschlüssels von dem Server; und
Entschlüsseln des verschlüsselten Teils der Daten.

14. Verfahren nach Anspruch 13, umfassend:
Übertragen des entschlüsselten Teils der Daten an die anfragende Anwendung.

15. Verfahren nach Anspruch 11, umfassend:
Übertragen, an den in der lokalen Umgebung befindlichen Server, einer zweiten Anfrage von einer zweiten anfragenden Anwendung, die in der lokalen Umgebung bereitgestellt wird, auf Zugriff auf die in der Cloud-Umgebung gespeicherten Daten, wobei die Zugriffs-Policy einen zweiten Satz von Zugriffsrechten umfasst, die den Zugriff auf die Daten durch die zweite anfragende Anwendung definieren.

16. Computerlesbares Medium, das Anweisungen enthält, die, wenn sie von einem Prozessor ausgeführt werden, den Prozessor veranlassen, Schritte durchzuführen, die umfassen:
Übertragen, von einer Rechte-Applikation, die in einer Cloud-Umgebung bereitgestellt wird, einer Anfrage für eine anfragende Anwendung auf Zugriff auf Daten, die in der Cloud-Umgebung gespeichert sind, an einen Server, der in einer lokalen Umgebung angeordnet ist, wobei der Server eine Zugriffs-Policy speichert, die einen ersten Satz von Zugriffsrechten umfasst, die den Zugriff auf die Daten durch die anfragende Anwendung definieren;
Empfangen des ersten Satzes von Zugriffsrechten von dem Server; und
Ermöglichen des Zugriffs der anfragenden Anwendung auf die Daten in Übereinstimmung mit dem ersten Satz von Zugriffsrechten.

17. Computerlesbares Medium nach Anspruch 16, wobei die anfragende Anwendung in der lokalen Umgebung bereitgestellt wird.

18. Computerlesbares Medium nach Anspruch 17, wobei die Zugriffsrichtlinie einen zweiten Satz von Zugriffsrechten umfasst, die den Zugriff auf die Daten durch eine zweite anfragende Anwendung definieren.

19. Computerlesbares Medium nach Anspruch 18, wobei sich der zweite Satz von Zugriffsrechten von dem ersten Satz von Zugriffsrechten unterscheidet.

20. Computerlesbare Medium nach Anspruch 18, wobei die zweite anfragende Anwendung in der Cloud-Umgebung bereitgestellt wird.
